Europäisches Patentamt

(19) European Patent Office

Office européen des brevets

(11) Publication number: **0 157 321**
**B1**

(12) EUROPEAN PATENT SPECIFICATION

(45) Date of publication of patent specification: 22.06.88

(51) Int. Cl.⁴: **G 21 C 1/00**

(21) Application number: 85103487.6

(22) Date of filing: 25.03.85

(54) **Pressurized water reactor plant comprising a pressurized pool.**

(30) Priority: 28.03.84 SE 8401711

(43) Date of publication of application:
09.10.85 Bulletin 85/41

(45) Publication of the grant of the patent:
22.06.88 Bulletin 88/25

(84) Designated Contracting States:
DE FR GB IT

(56) References cited:
CH-A- 549 854
FR-A-2 112 044
FR-A-2 264 367
FR-A-2 314 559
FR-A-2 502 828
GB-A-1 074 345
GB-A-2 098 786

(73) Proprietor: AB ASEA-ATOM
S-721 83 Västeras (SE)

(72) Inventor: Hannerz, Kare
Raby Rytterne
S-725 92 Västeras (SE)

(74) Representative: Boecker, Joachim, Dr.-Ing.
Rathenauplatz 2-8
D-6000 Frankfurt a.M. 1 (DE)

· Courier Press, Leamington Spa, England.

## Description

The invention relates to a pressurized water reactor plant comprising a pressurized pool according to the precharacterising part of claim 1. Such a reactor is known from the GB—A—2 098 786.

The reactor plant described in the GB—A—2 098 786 includes a pressurized pool containing one reactor core only and several steam generators connected thereto.

The invention aims at developing a pressurized water reactor of the above-mentioned kind, which can be built up in a relatively cost-saving manner and offers a relatively simple procedure for refuelling the reactor core.

In order to achieve this aim the invention suggests a pressurized water reactor plant according to the introductory part of claim 1, which is characterized by the features of the characterizing part of claim 1.

A further development of the invention is characterized by the features of claim 2.

A reactor plant according to the invention is built up to a large extent from a plurality of substantially identical modules, which are arranged in a common borated pool, each module comprising a reactor core and a steam generator adapted to the thermal power of the reactor core. Further, without the internal diameter of the reactor pool becoming too large, each steam generator can be mounted vertically above a corresponding reactor core, and approximately coaxially with this core.

In a reactor plant according to the invention, each reactor core is preferably constructed to give a thermal power of at least 120 MW. Since each steam generator is connected to an incoming feed water conduit and to an outgoing steam conduit, it would be far too laborious to move the steam generators on each fuel renewal occasion.

According to the invention, each steam generator is permanently fixed inside the pool, and a lower vessel, accommodating the corresponding core, is connected to the lower end of the steam generator.

Moving horizontally — and by means of remote operation — a vessel containing all the fuel rods of the module, as well as renewing fuel rods and finally replacing the vessel and reestablishing all mechanical and hydraulic connections offer several problems, which — as well as those mentioned above — are solved by the invention.

A reactor plant having more than one reactor core is known from the US—A—3 325 374. However, the reactor plant described therein does not show a great many essential features of the present invention. Thus, the US—A—3 325 374 discloses no pool, no neutron-absorbing agent, no cooling device for pool liquid, no upper shutdown opening, no lower shutdown opening, no pool wall portion to which a steam generator is fixed, and no foundation which supports the lower vessel portion and, at the same time, permits such a great horizontal movement of this that it is accessible for refuelling.

The invention will now be described in greater detail with reference to the accompanying drawings which illustrate in

Figure 1 a first embodiment of a module reactor according to the invention in a partial vertical section through the reactor pool,

Figures 2 and 3 details of the steam generator shown in Figure 1 in vertical sections,

Figure 4 a partial section along line IV—IV in Figure 1 on an enlarged scale,

Figures 5—6 a second embodiment of a module reactor according to the invention, of which shows

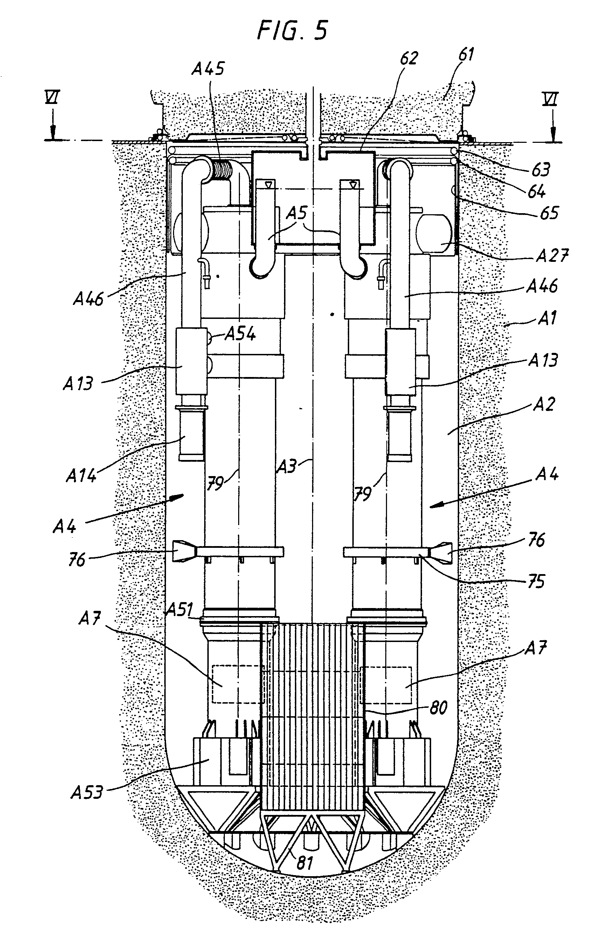

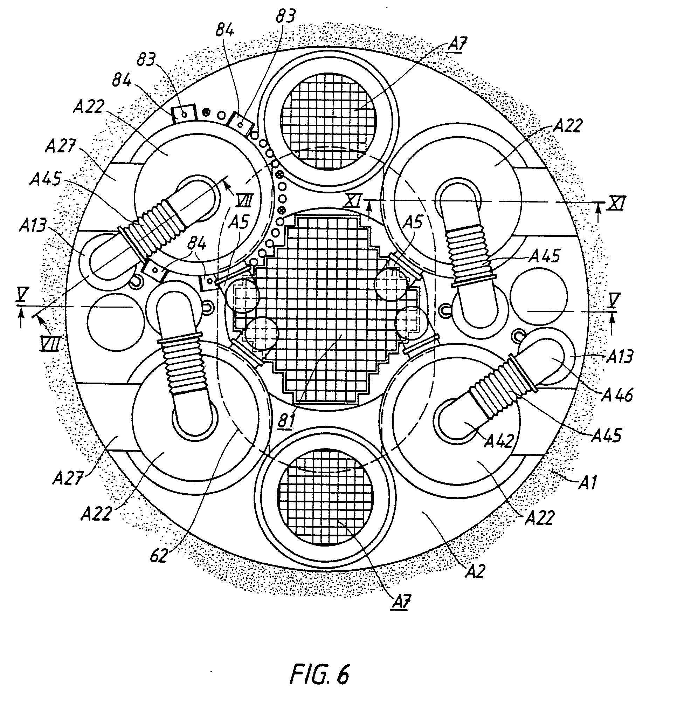

Figure 5 a vertical section along line V—V in Figure 6,

Figure 6 a horizontal section along line VI—VI in Figure 5,

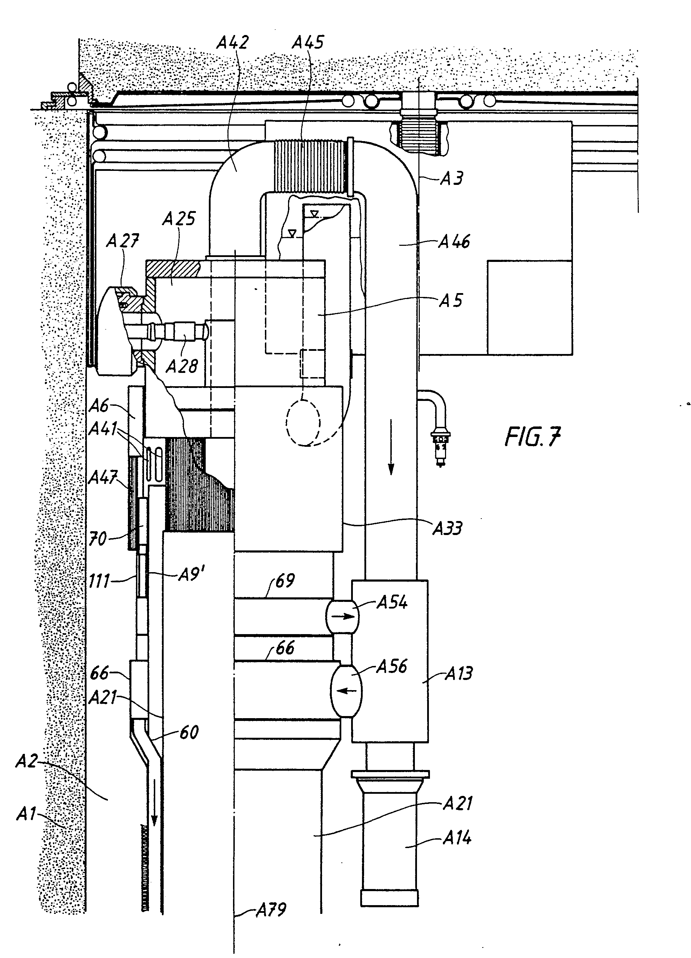

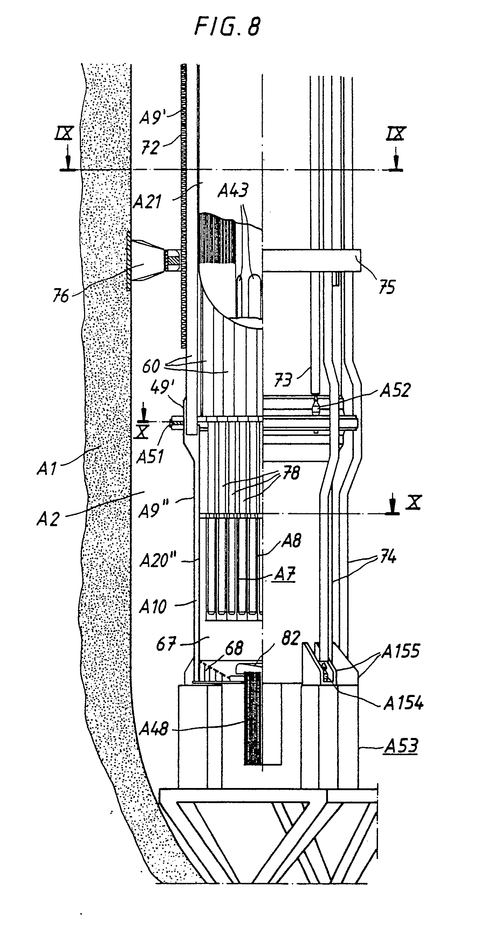

Figures 7 and 8 together the upper half and the lower half, respectively, of one of the reactor modules partly in vertical section along line VII——VII in Figure 6, and partly in lateral view with the same direction of view,

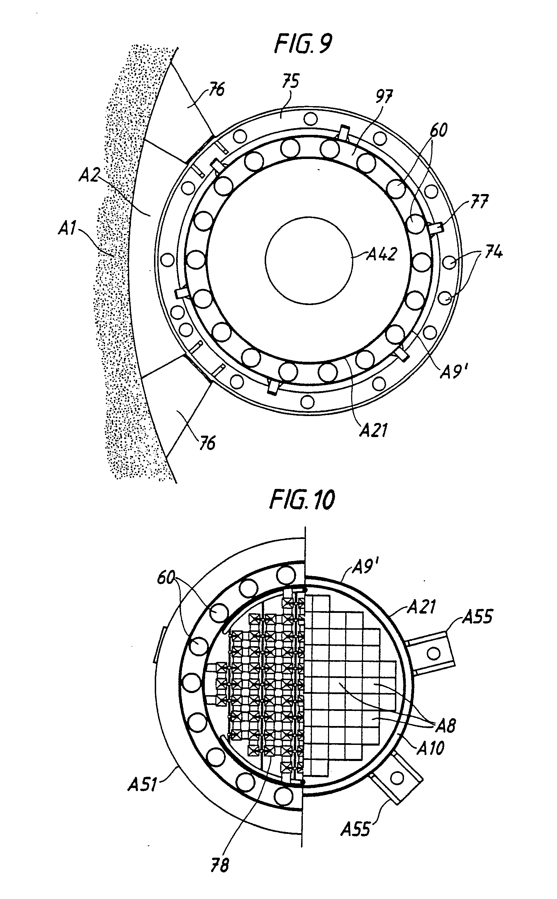

Figure 9 a horizontal section along line IX—IX in Figure 8,

Figure 10 a horizontal section along line X—X in Figure 8,

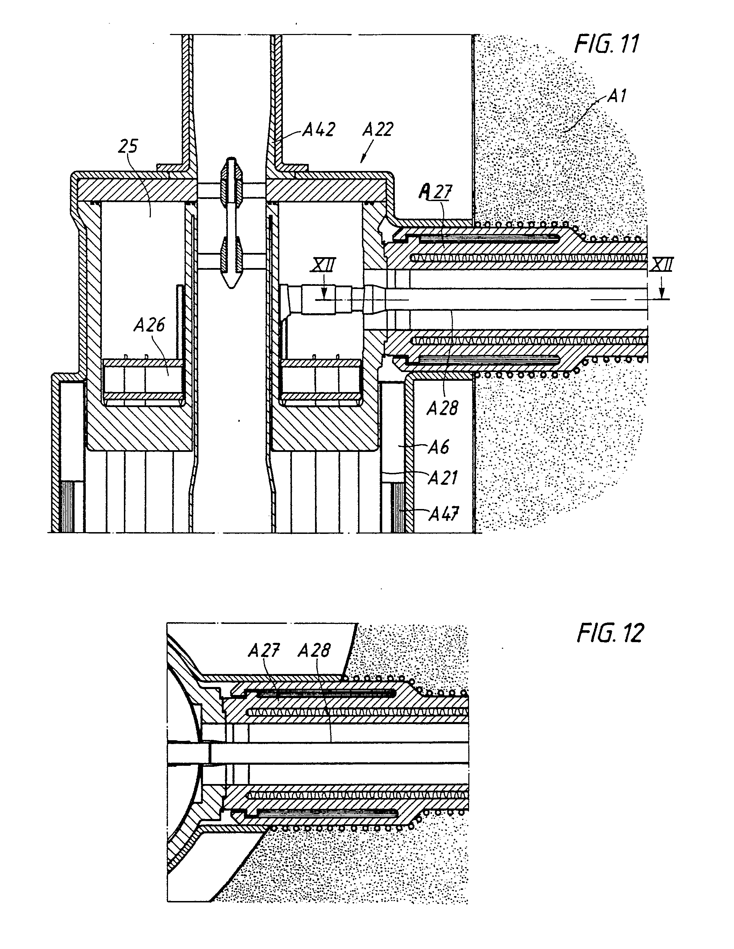

Figure 11 a vertical section along line XI—XI in Figure 6,

Figure 12 a horizontal section along line XII—XII in Figure 11,

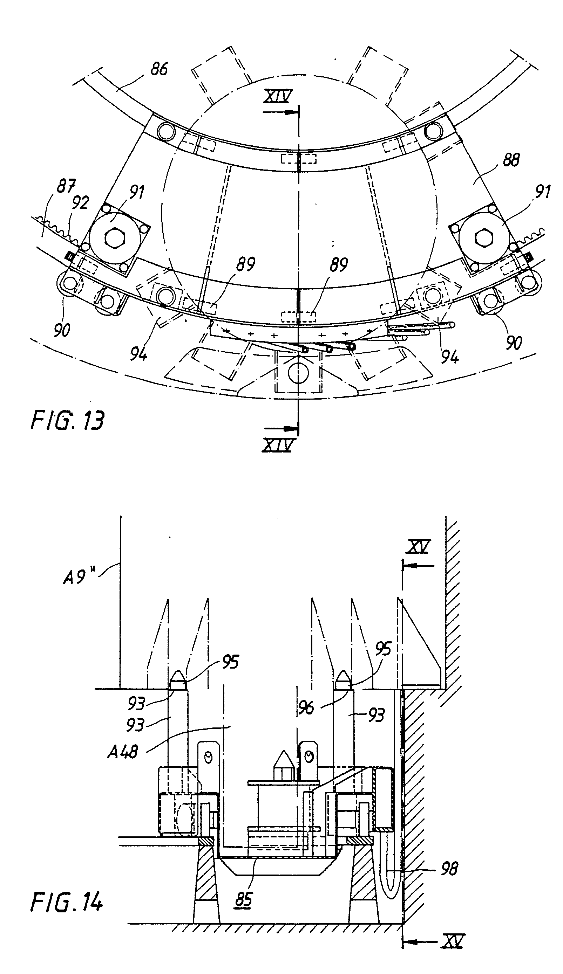

Figure 13 in vertical view a carriage for horizontal movement of the reactor core during refuelling,

Figure 14 a vertical section along line XIV—XIV in Figure 13,

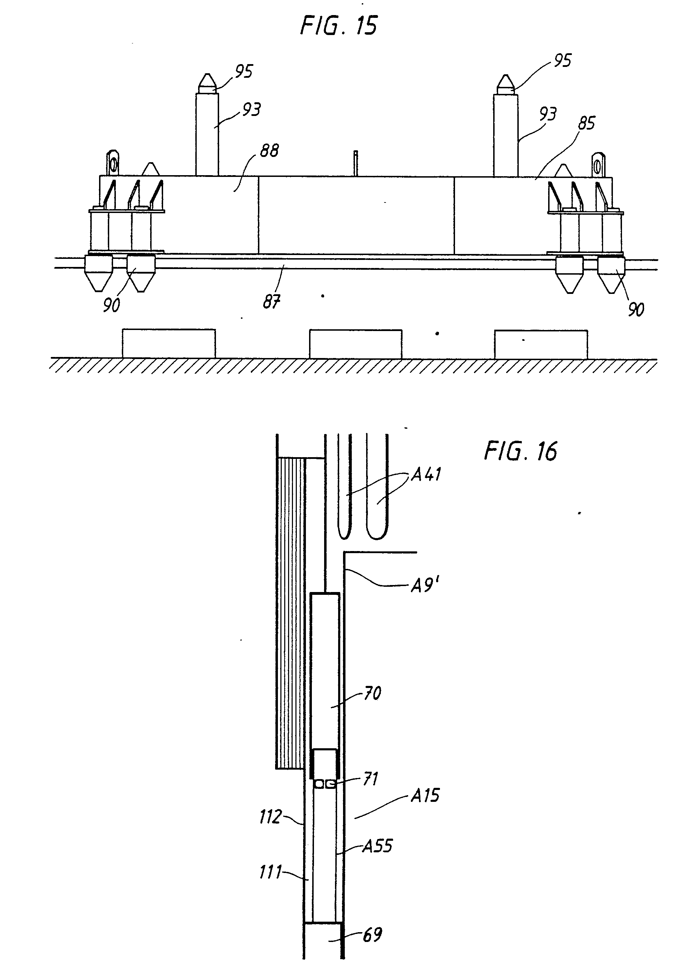

Figure 15 a vertical section along line XV—XV in Figure 14,

Figure 16 a detail of Figure 7 on an enlarged scale,

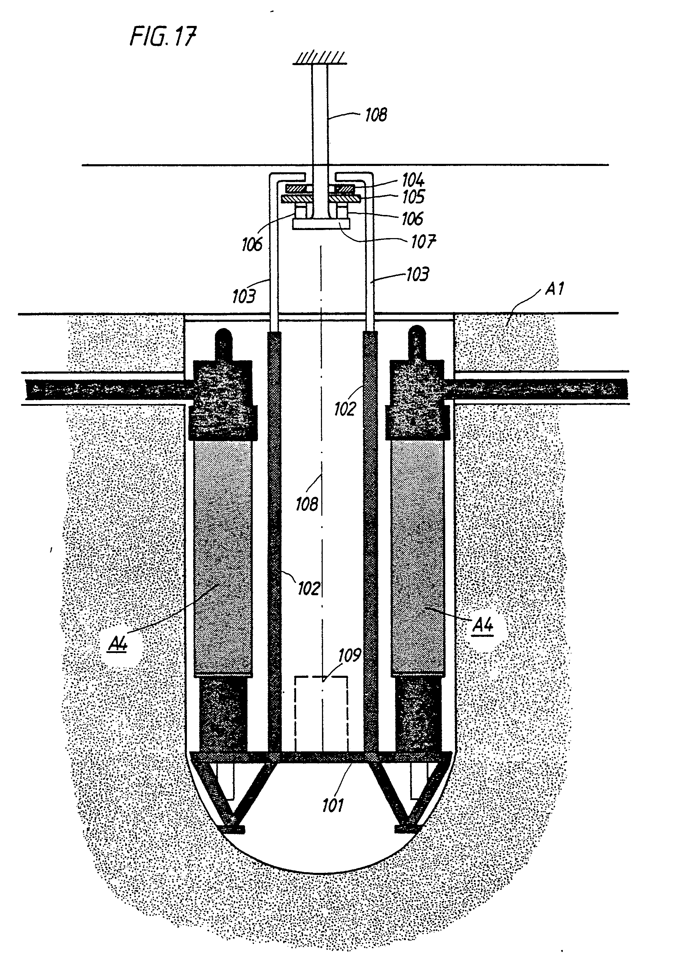

Figure 17 in vertical section through the pool an alternative device for refuelling, in a third embodiment according to the invention,

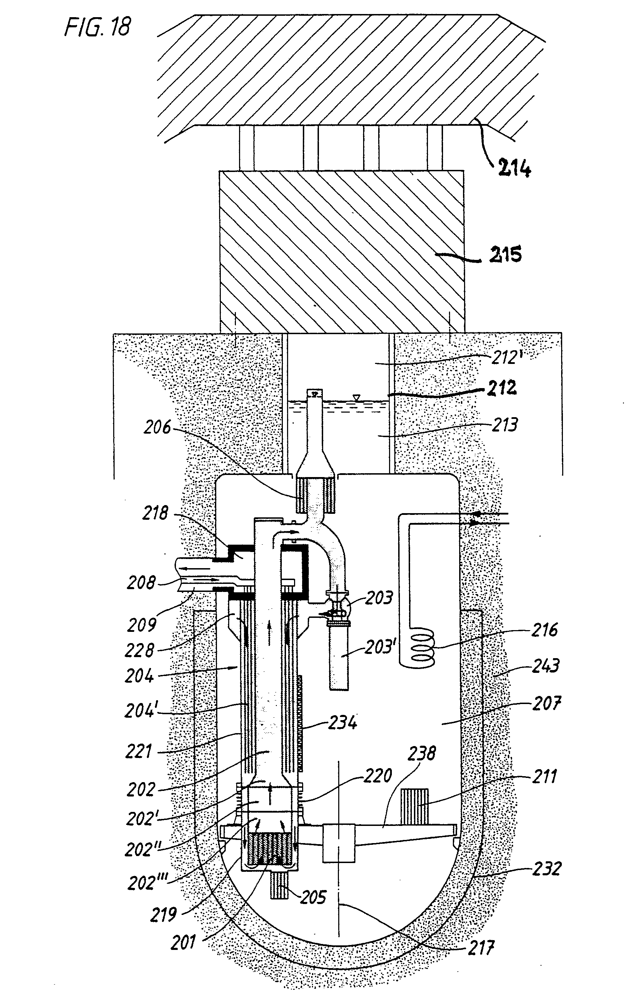

Figure 18 a section through the vertical center line of a reactor module according to a fourth embodiment of the invention,

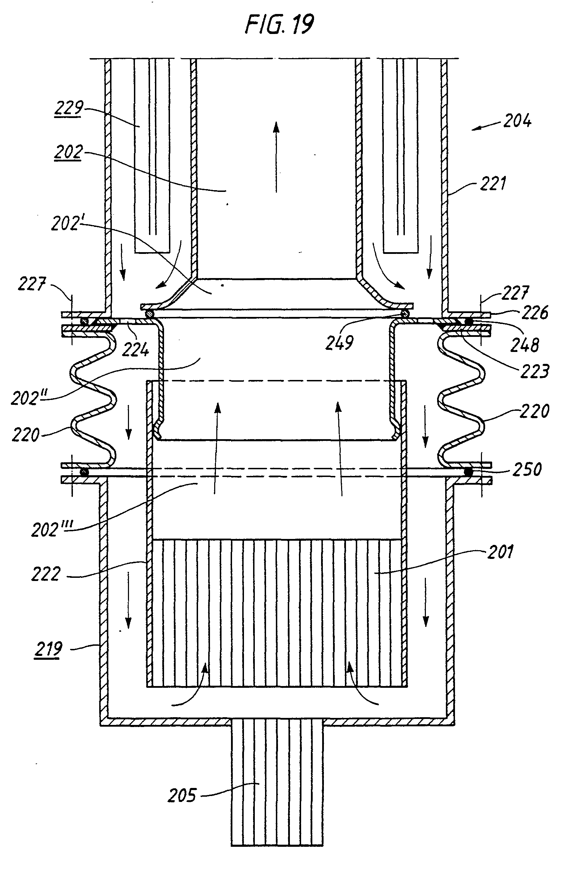

Figure 19 a part of Figure 18,

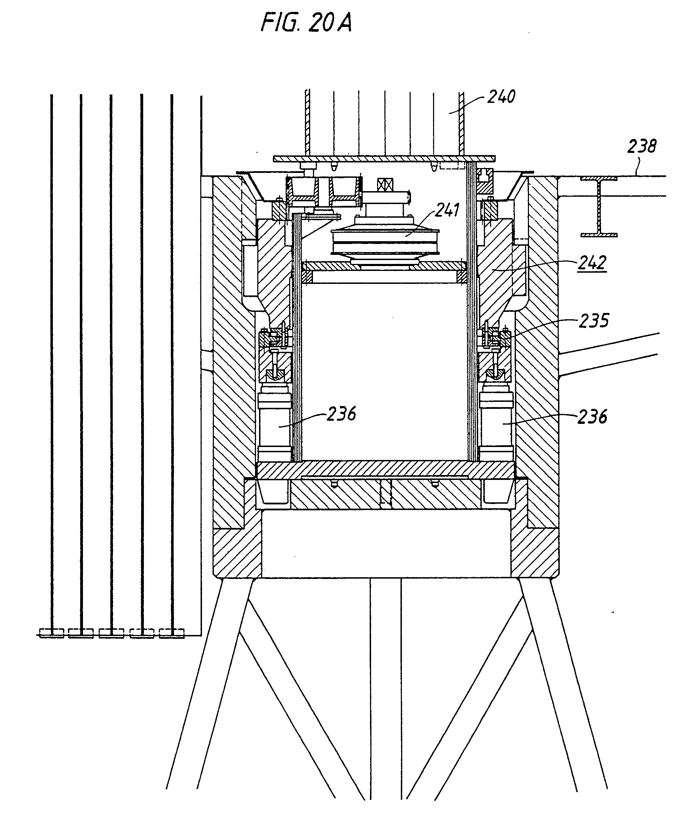

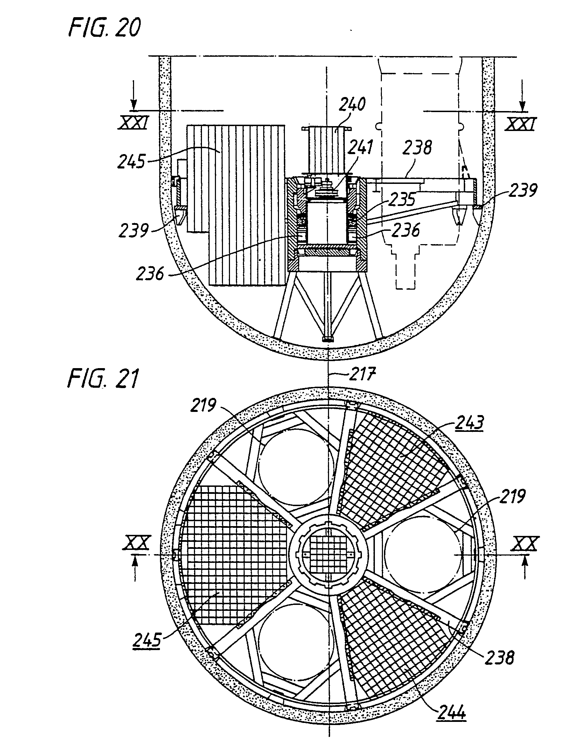

Figure 20 the reactor shown in Figure 18, in a partial vertical section along line XX—XX in Figure 21,

Figure 20A a part of Figure 20,

Figure 21 a horizontal section along line XXI—XXI in Figure 20.

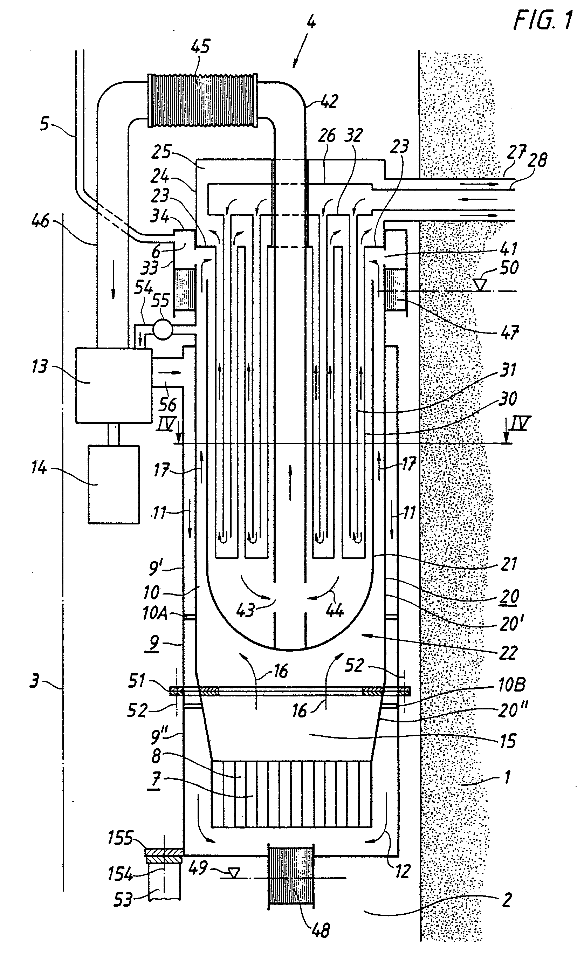

In Figure 1, reference numeral 1 designates a substantially circular-cylindrical wall of a pool 2 which is filled with pool liquid and the vertical center line of which is designated 3. The pool 2 comprises a cover (not shown) and a plurality of mutually identical reactor modules 4 as well as a pressurization vessel (not shown), the lower portion of which communicates with the pool liquid, whereas an upper steam-filled portion is connected, via a plurality of pressurization tubes 5, to an inlet chamber 6 of a corresponding reactor module 4. The pressurization vessel is attached to the lower side of the pool cover and communicates, via a steam conduit passing through said pool cover, with a steam boiler which is arranged outside the pool and provides a pressure of at least 10 bar — preferably more than 30 bar.

The reactor module 4 has a reactor core 7 which is arranged in a circular-cylindrical reactor vessel 9 and comprises a plurality of vertical fuel assemblies 8, which are provided with throughgoing, vertical cooling channels. The fuel assemblies 8 are surrounded by the lower end of a substantially hollow-cylindrical, sleeve-shaped member 20, which is surrounded by the reactor vessel 9 in such a way as to define a supply channel 11 for reactor coolant between the reactor vessel 9 and the sleeve-shaped member 20, the channel 11 having an annular cross-section. The reactor vessel 9 and the member 20 are fixed in relation to each other, among other things, with the aid of a plurality of radially directed rods 10A and 10B, which are arranged in the supply channel 11. During normal reactor operation, the reactor core 7 is traversed by an upwardly directed flow of a reactor coolant consisting of water, in which the concentration of neutron-absorbing agent is zero or very small. In the pool liquid, on the other hand, the concentration of neutron-absorbing agent, for example boric acid, is so high that the power developed in the reactor core is reduced to the decay power even if only part of the coolant volume of the reactor cooling circuit is replaced by pool water. The lower side of the reactor core is hydraulically connected to the inlet channel 11, in which a downwardly-directed coolant flow indicated by arrows 11 and 12 is propelled by a circulating pump 13 driven by an associated pump motor 14, both elements 13 and 14 being part of the reactor module. A hydraulic connection conduit between the outlet side of the pump and the inlet channel 11 is designated 56. Alternatively, instead of one single annular inlet channel 11, a plurality of inlet channels located circumferentially adjacent each other may be provided. The upper side of the reactor core 7 is hydraulically connected to an outlet channel 15 which, in the vicinity of the core, has a circular cross-section but which, at a higher level, has an annular cross-section and is defined between the sleeve-shaped member 20 and the outside of an elongated, vertical, substantially circular-cylindrical steam generator container 21 which constitutes an external component of a steam generator 22.

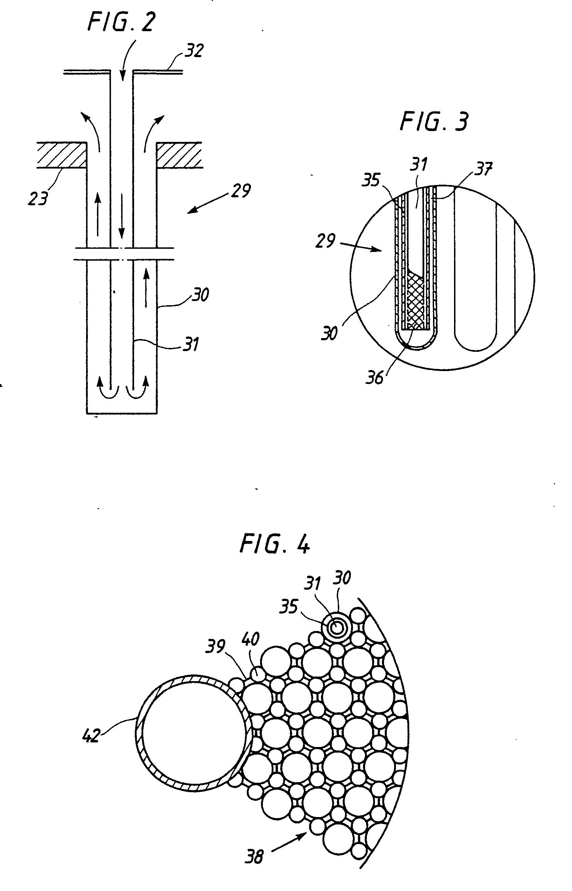

The container 21 is provided on top with a cover 23, which is formed as a tube plate and which forms the lower wall in a steam chamber 24 with a steam space 25. The steam space is provided with a horizontal steam conduit 27 for generated steam. A feed water chamber 26 with an associated feed water pipe 28, arranged inside and coaxially with the steam conduit 27, is located in the steam chamber 24. The feed water chamber 26 is connected to a feed water pump via said horizontal pipe 28. The container 21 accommodates a number of evaporator units 29. The primary water flows along the evaporator units 29 on the outside thereof. These evaporator units are attached to the tube plate 23, and consist of an evaporator tube 30 and a feed water tube 31 (Figure 2). The evaporator tube 30 is closed at the bottom and its top opens out into the steam chamber space 25. The feed water tube 31 in the embodiment according to Figure 2 is attached, at the top, to the lower wall 32 of the feed water chamber 26, said wall being formed as a tube plate. The feed water tube 31 extends down into the evaporator tube 30 and opens out into the lower part of said tube. The upper wall 18 in the feed water chamber 26 may be formed as a removable lid so that the feed water tubes 31 may be removed upwardly. The steam conduit 27 is passed through the vertical pool wall 1 and is fixed thereto, which means that the entire weight of the steam generator 22 — or a greater part thereof — is supported by the steam conduit 27.

The inlet space 6 mentioned above is intended for water supply to the primary circuit of the steam generator. It is limited, among other things, by means of a hollow-cylindrical body 33, arranged coaxially with the vessel 21 and at the upper end thereof, which body includes an internal flange 34 formed at the upper edge of the body 33. The flange 34 surrounds the steam chamber 24 and is welded thereto by means of a sealing weld seam.

As shown in Figures 3 and 4, the feed water tubes 31 are surrounded by an outer tube 35, whereby the heat.tranmission from water and generated steam in the evaporator tubes 30 to the feed water flowing downwards in the feed water tube 31 is limited. By applying a cell-forming network 36, as shown in Figure 3, between the tube 31 and the tube 35, water movement in the gap can be counteracted and the insulating capacity be improved. The external tube 35 is provided at regular intervals with protruding elements (dimps) 37 along its entire length, which center the feed water tube 31 in the steam generating tube 30. The evaporator tubes 30 are fixed at a number of levels by means of a plurality of spacers 38, as shown in Figure 4. These may be built up of short tubes 40 which are connected to each other by vertically oriented plates 39 and which form supports for the evaporator tubes but still permit substantially free passage of primary water in the vertical and horizontal directions.

The outlet channel 10 extending from the reactor core opens out into the inlet space 6 for primary water of the steam generator.

The cylindrical wall of the steam generator container 21 has, at its upper edge, a plurality of holes 41 arranged circumferentially one after the other. Primary water from the inlet space 6 flows through the holes 41 and horizontally in between the evaporator units 29 and then flows vertically downwards between these to the end portion of the steam generator container 21, where the water flows into a central tube 42 through a plurality of openings 43 in the tube wall, as indicated by the arrows 44. The central tube 42 is passed through central channels of the steam chamber 24 and the feed water chamber 26. The upper end of the central tube 42 is connected via a bellows 45 and a return tube 46 to the inlet side of the circulating pump 13. The bellows 45 permits vertical movement of the tube 46 in relation to the tube 42.

The steam generator is dimensioned in such a way that complete evaporation is obtained in the lower part of the tubes 30, whereas a certain overheating of generated steams is obtained in the upper part of the tubes 30, and preferably in such a way that saturated steam is obtained at full load, whereas overheating of the steam is obtained at partial load.

The gap between the sleeve-shaped member 20 and the hollow-cylindrical body 33 is filled up with an annular convection blocking device 47, which includes a large number of vertical, throughgoing channels, for example in the form of a honeycomb structure. A cylindrical, lower convection blocking device 48 is arranged at the bottom of the reactor vessel 9 in such a way that it forms a lower emergency shut down channel. During normal operation, reactor coolant is hydraulically connected with the pool liquid through the emergency shutdown channel, a boundary layer — indicated by the level symbol 49 — between the pool liquid and the reactor coolant being provided at some location in the convection blocking device 48. A similar boundary layer in the upper convection blocking device 47 is indicated by the level symbol 50.

The reactor modules present in the pool 2 are each provided with a control system of the same type as that described in GB—A 2 098 876 (corresponding to U.S. patent application S.N. 361 641).

In a shutdown reactor the primary cooling circuit of each reactor module contains a considerable amount of pool liquid. However, there may be cases where a complete mixing has not taken place, with the result that an accumulation of relatively pure water may exist at some location in the system. If this accumulation of water, upon start-up of the circulating pump and commissioning of the reactor, is driven into the reactor core, too rapid an increase of the reactor power may occur.

For the purpose of avoiding the increase of the reactor power mentioned, the suction side of the circulating pump 13, in addition to being connected to the return tube 46, is also connected to a suction tube 54 which, by way of a valve 55, communicates with the outlet channel 15.

The valve 55 is controlled in dependence on the temperature in the outlet channel 15 in such a way that the valve is open at the temperature prevailing in this channel in case of a shutdown reactor, and closed at the temperature prevailing in the channel 15 during normal reactor operation. In this way, a considerable part of the liquid delivered by the pump 13 to the inlet channel during start-up of a shutdown reactor module, will be taken directly from the outlet channel 15. The absorber concentration is there approximately the same as in the pool liquid.

The reactor vessel 9 is composed of an upper vessel part 9' and a lower vessel part 9'', these parts 9' and 9'' being detachably connected to each other by means of a flange connection 51 in which the flanges may be pressed against each other or be released from each other by the operation of bolts or the like, which are operatable from above. These bolts are indicated with the dash-dotted lines 52 in the drawing.

The lower part 9'' of the reactor vessel rests on a foundation 53 fixed to the pool bottom and is fixed thereto with the aid of a means of attachment detachable from above. The means of attachment may, for example, include a plurality of vertical mounting bolts (indicated by dash-dotted line 154), each of which passing through a horizontal vessel projection 155 and being screwed into the foundation 53.

Also the sleeve-shaped member 20 is composed of two parts, namely, one upper sleeve part 20' and one lower sleeve part 20'', which are fixed to the vessel parts 9' and 9'', respectively. A disconnection or a connection of the vessel parts 9' and 9'' automatically results in a disconnection and connection of the sleeve parts 20' and 20'', and in lower portions of the outlet channel 10 and the inlet channel 15, extending in the vessel part 9'', being automatically separated or joined to corresponding upper channel portions.

In reactor operation the majority of the fuel assemblies 7 are located vertically below the steam generator. When refuelling is to take place and when the reactor cover and the pressurization vessel fixed thereto have been removed, the flange connection 52 and the mechanical connection between the foundation 53 and the lower vessel part 9'' are detached, whereupon the lower vessel part 9'' is displaced in a horizontal direction, for example with the aid of a transportation device arranged in the pool, to a position in which none of, or only a minority of, the fuel assemblies of the core are located vertically below the steam generator.

The module reactor shown in Figures 5—15 differs from that described with reference to Figures 1—4 in that the upper part 20' of the sleeve-shaped body 20 has been omitted, whereas a corresponding part of the inlet channel 11 connected to the lower side of the reactor core has been replaced with a plurality of vertical downcomers 60. Otherwise, the module reactor shown in Figures 5—15 comprise all the constructional elements which are mentioned in connection with the above-mentioned module reactor, and therefore the reference numerals for the constructional elements of this module reactor are also used for the corresponding constructional elements shown in Figures 5—15, with the addition of the letter A preceding the reference numeral.

In addition, 61 designates a pool cover, 62 a pressurization container, 63 and 64 the supply conduit and the outlet conduit for a large number of cooling coils 65 completely surrounded by pool water. The outlet side of the pump A13 is connected to an annular distribution chamber 66. A plurality of downcomers 60 emanating from this chamber are connected to the inlet space 67 of the reactor core via a distribution device 68. On the suction side the pump A13 is connected to the return tube A46 and to an annular auxiliary suction chamber 69. The hollow-cylindrical gap defined between the steam generator container A21 and the upper reactor vessel part A9' — to the extent it is not filled up with the downcomers 60 — constitutes an outlet channel A15 for the reactor coolant flowing from the core 7. A plurality of vertical valve tubes A55, closed at the top, are arranged in a hydraulic and rigid mechanical connection with the annular auxiliary suction chamber 69, and each valve tube is inserted — with no mentionable play — with its upper ends into the lower end of a corresponding valve sleeve 70 which is arranged in a rigid mechanical connection with the steam generator and is closed at its upper end. The valve tubes A55 and the valve sleeves 70 are arranged in an annular space 111 which is defined between the upper reactor vessel part A9' and a circular-cylindrical sleeve 112. At its lower edge the sleeve 112 is fixed to the annular auxiliary suction chamber 69. The space 111 comunicates with the outlet channel A15. At its upper end, each valve tube A55 is provided with at least one hole 71 through the tubular wall. In case of a shutdown reactor, each tube A55 is related to a corresponding sleeve 70, as shown in Figure 16, which means that heavily borated water — upon start-up of the pump A13 — will be sucked onto the pump A13 from the outlet channel A15 via the holes 71. During normal reactor operation or when the temperature of the reactor vessel approaches its temperature during normal reactor operation, however, the thermally caused extension of the reactor vessel will result in the valve tube A55 being inserted so far into the sleeve 70 that the hole 71 is sealed.

All the surfaces of the reactor vessel facing the pool water are provided with heat insulation 72.

A plurality of tool guide tubes 73 and 74 are fixed to the reactor vessel. These are intended to guide flexible tools when operating fixing members A52 and A154, respectively. Tubes 73 and 74 are arranged with their upper ends approximately on a level with the steams conduit A27.

The steam generators A22 are each suspended from a steam conduit A27, which is passed through the pool wall A1 and is fixed thereto and which takes up the entire weight of the steam generator or at least a greater part, for example 70%, of this weight.

In order to prevent oscillations in case of an earthquake, the upper reactor vessel part A9' with the associated insulating layer 72 is surrounded — with a certain play — by a supporting ring which is fixed to two supporting arms 76 cast into the pool wall A1. The substantially circular-cylindrical vessel part A9' has a plurality of projections 77, which are radially directed in relation to the vertical center line 79 of the vessel part A9'. With a certain play in the tangential direction, the projections 77 are each inserted into a vertically running slot in the supporting ring 75, which within wide limits provided freedom of movement of the reactor vessel part A9' in the vertical direction.

As an added precaution each reactor module is provided with a plurality of strictly speaking unnecessary absorber rods, which during normal reactor operation are stored in a plurality of rectangular tubes 78, each of which being arranged above a corresponding fuel assembly. The tubes 78 can easily be removed during refuelling.

The pool A2 comprises four reactor modules, the vertical center lines 79 of which are positioned in an imaginary circular-cylindrical surface. A stand 80 for storing spent fuel assemblies is arranged centrally in the pool A2. The stand 80 rests on an foundation 81 and is intended to accomodate four layers of vertically arranged fuel assemblies.

A deflection hood 82 formed with circular angular horizontal section is arranged coaxially with respect to the cylindrical convection blocking means A48 at a short distance from the outlet end thereof, whereby pool liquid flowing in case of an emergency shutdown will be subjected to a directional change of at least 70°, preferably 120°. Velocity components for a greater part of the inflowing reactor coolant, delivered by the sprinkler device 68, intersect velocity components for a greater part of the flow of pool water directed by means of the screen 82, in such a way that the intersectional points lie in a lower half of the inlet chamber 67.

When refuelling is to take place, the mechanical connection between the reactor vessel A9 and the foundation A53 is detached by operating the fixing members A154 which, similar to the fixing members A52, may be of a bayonet type. Thereafter, the reactor vessel A9 is lifted by means of vertical lifting rods 83 attached to brackets 84 welded to the reactor vessel, which means that also the reactor core, the sleeve-shaped member A20'', the downcomers 60, the pump A13 and other constructional elements arranged in a rigid mechanical connection with the reactor vessel A9 are subjected to a lifting operation, whereas the steam generator A22 maintains its position. Thereafter, a car 85 is run in under the reactor vessel. The car 85 runs on two rails 86 and 87 running substantially in parallel with the circular-cylindrical pool wall A1. The car 85 includes a frame 88 provided with a plurality of wheels 89, which are arranged to be able to roll on horizontal surfaces of the rails 86 and 87, and with a plurality of guide rollers 90 arranged to roll on a vertical surface of the rail 87. In addition, the car 85 includes two hydraulic motors 91 which are fixed to the frame 88 and which are each arrange to drive a gear wheel journalled in the frame 88, said gear wheel being in engagement with teeth 92 provided in the rail 87. A plurality of vertical fingers 93 are attached to the frame 88. The car 85 is displaced along the rails 86 and 87 to a position where the vertical center lines of the fingers 93 substantially coincide with vertical center lines of corresponding holes made in radial projections 94 welded to the lower end portion of the reactor vessel. Thereafter, the above-mentioned lifted components are lowered, causing each finger 93 to penetrate with a relatively thin end portion 95 into a corresponding hole and causing the weight of the lifted load to be finally supported by the fingers since the projections 94 rest on upwardly-directed annular supporting surfaces 96 of the fingers.

Thereafter, the mechanical connection A51 is detached by operating the fixing members A52 and a lifting force is again applied to the upper reactor vessel part A9', whereby the lower reactor vessel part A9'' and the components located therein are released from the components of the reactor module which are located at a higher level. By the lifting movement, the lower ends of the downcomers 60 are each pulled out of a tightly fitting bushing sleeve of an annular cover plate 97, which is arranged to seal — at the top — the gap between the reactor vessel part A9'' and the sleeve-shaped member A20''. Thereafter, the car 85 is run back on the rails and is locked in a position where the reactor core is located approximately straight in between two reactor modules, all the fuel assemblies thus being accessible for replacement. When the refuelling is completed, the core is returned to its normal position, after which the components suspended from the lifting device are lowered down and connected together by means of the connection member A51; thereafter a new lifting operation takes place, the car is removed, the lifted components are lowered so that the lower reactor vessel part A9'' will rest on the foundation, whereafter the fixing members A154 are tightened. A pressure medium can be supplied via hydraulic lines 98, whereby the car can be supported by hydraulic cushions during the load movement.

According to a second alternative system for fuel, radially extending rails are used instead of the rails 86 and 87, the stand 81 being replaced by two stands arranged near the pool wall.

A third alternative system is shown in Figure 17. The module reactor shown in Figure 17 has four reactor modules A4, which are constructed in the same way as the reactor modules described with reference to Figures 5—16 and are distributed along the pool wall in the same way as those in a circular-cylindrical pool space. The reactor modules are arranged on a circular platform 101 arranged to be rotatable around a vertical axis of rotation which approximately coincides with the vertical center line of the substantially circular-cylindrical pool space. A plurality of vertical supporting bars 102 are arranged with one and the same radial distance from the axis of rotation and are attached with their lower ends to the platform 101.

During refuelling each one of a plurality of L-shaped joint bars 103 is arranged with its long leg in a tensile force-transmitting connection with a corresponding supporting rod 103, the short legs resting on an upper ring 104 belonging to a thrust bearing which also includes a lower ring 105. The ring 105 is supported by a plurality of hydraulic cylinders 106, which in turn rest on a steel plate 107. This is welded to the lower end of a steel bar 108, the upper end of which is attached to a supporting structure (not shown) resting on the pool wall A1.

During refuelling, all the reactor modules A4 are raised by heaving the platform 101 with the aid of the hydraulic cylinders 106, whereupon the connection components of the mechanical connection means 51A are released with respect to each other in each reactor module. After this, the platform 101 and the lower reactor vessel parts A9'' resting thereon are subjected to a slight lowering operation with the aid of the hydraulic cylinders 106, whereas the upper reactor vessel part A9' and the downcomers 60 are retained in unchanged vertical positions, whereafter the platform 101 is rotated about the axis of rotation 108, and the reactor core with its associated lower reactor vessel part A9'' in each reactor module is displaced in an tangential direction in relation to the other parts of the reactor module. When at least one of the lower reactor vessel parts A9'', by the rotating movement, has assumed an angular position in which the corresponding reactor core is accessible for refuelling, the platform is locked in this position by relieving the hydraulic cylinders 106. A lower reactor vessel part A9'' in the above-mentioned angular position is indicated in the drawing by a dashed contour 109.

In a reactor which is provided with the device shown in Figure 17, the guide tubes 74 can be dispensed with, since the fixing members A154 in this case need not be able to be operated from the pool top.

For the reactor shown in Figures 18, 19, 20 and 21, the meaning of the reference numerals will be clear from the following list:

201 Reactor core
202 Riser
203 Circulating pump
203' Wet motor
204 Steam generator
204' The tube bundle of the steam generator. This has the same structure as the tube bundle shown in Figures 1, 2, 3 and 4.
205 Lower convection blocking means
206 Upper convection blocking means
207 Borated and pressurized water pool
208 Feed conduit for feeding water into the steam generator
209 Steam conduit for generated steam
211 Stand for spent fuel
212 Pressurization container
212' Steam volume of the pressurization container
213 Volume of saturated water of the pressurization container
214 Compressive-force transmitting element, for example a lift jack

215 Cover for the concrete pressure vessel of the reactor

216 Cooling coil for cooling the liquid in pool 207 to a mean temperature which is at least 50°C lower than the temperature of the outlet cooling water from the reactor core

247 Pressurization channel

217 Axis of rotation for platform 238

218 Steam collecting tank of the steam generator

238 Rotatable platform

241 Upper part of the concrete monolith

242 Means for pressure-tight sealing on top of pressurization container 212

243 A substantially circular-cylindrical limiting wall for pool space 207

The reactor vessel 219 is hydraulically and mechanically connected, by means of a bellows 220, to a metallic casing 221 which surrounds the lower part of the steam generator 204. The riser portion 202''' is constituted by the upper part of a hollow core barrel 222, which is opened at both ends ·and arranged to be surrounded by the reactor vessel 219 and to surround the reactor core 201. The core barrel 222 surrounds, with the above-mentioned upper end portion, the circular-cylindrical shroud 202'' which is suspended from the upper edge of the bellows 220.

- Contrary to what is the case with the reactor shown in Figure 1, the outlet coolant from the reactor core 201 flows vertically upwards through the centrally arranged riser 202, and is then pumped downwards in a return channel made with annular cross-section, and is finally supplied to the downwardly-directed inlet opening of the reactor core 201.

The riser 202 is divided into three parts in the vertical direction. Thus, it comprises an upper part 202', a lower part 202''' and an intermediate vertically slidably arranged circular-cylindrical shroud 202'', which is mechanically and hydraulically connected to the parts 202' and 202''' and thus forms part of a so-called slide connection. The bolts indicated by lines 227 can be operated from above. They are passed, with a play, through the flange 226 and are screwed into threaded holes of the flange 223.

At its upper end the bellows 220 has a flange 223 which is pressed against a flange 226 of the casing 221 with the aid of threaded bolts indicated by dash-dotted lines 227. The bellows 220 also has a lower flange which is pressure-tightly connected to a corresponding flange in the reactor vessel 219. For sealing there are used three circular sealing rings 248, 249 and 250.

The riser portion 202' has at its lowest part a substantially circular-cylindrical shroud 202'', which is vertically movable downwards in relation to the guide cylinder 222 along a distance of 50—500 mm. At its top the shroud 202'' has a perforated, annular horizontal portion.

From the annular distribution chamber 228 the primary flow passes downwards through the tube bundle 229 of the steam generator (outside the tubes). The fundamental design of the steam generator deviates from that shown in Figure 1 by the fact that the riser has replaced the central return flow tube used in the earlier module design.

From the tube bundle 229 the main circulating flow — now cooled — flows to the peripheral annular downcomer column of the reactor vessel to the bottom plenum of the core, and then into the core.

The inlet plenum of the core is connected to the borated pool by means of a lower convection protection means 205. The upper end of the riser is connected to the pool 207 by means of a bent tube and an upper convection protection means 206.

During refuelling, the concrete lid 215 is pushed out from a tunnel-shaped space in the monolith.

Outside of the internal liner of the concrete vessel, which is coated with stainless steel, there is a sealing sheet 232 cast into the concrete.

All hot surfaces in the pool 207 are provided with a heat insulation 234 being shown only in one place.

At the bottom the steam generator is provided with a seismic support, which prevents horizontal oscillation caused by horizontal accelerations in case of an earthquake.

The reactor includes three upper convection-preventing devices 206, which are distributed around the vertical axis 217.

During refuelling, the cover is removed by a horizontal movement with the aid of hydraulic or pneumatic devices. Thereafter — in each module — the bolt joints are detached between the lower end of the steam generator and the upper end of the reactor vessel. The bellows 220 is compressed 5 to 30 cm and is secured in compressed position with the aid of special tools. Together with the upper flange of the bellows, the cylindrical sheet shroud 202'' is pressed downwards with a sliding seal in the same movement.

The next step is the lowering of a circular tool 242 having a plurality of vertically extending teeth 246 into a corresponding central, substantially cylindrical space formed in a rotatable circular platform 238. The tool 242, which constitutes a bayonet insert, comprises a large roller thrust bearing 235 and a number of hydraulic cylinders 236. The platform 238 supports the reactor vessels 219. With the aid of the hydraulic cylinders, the platform is lifted from the brackets 239, located along the periphery of the pool, on which it has rested, and can then be rotated so that at least one of the reactor vessels becomes accessible from above. The rotation is carried out with the aid of a hydraulic motor 241 included in the tool 242. Refuelling is then performed, suitably using a temporary fuel rack 240 positioned on top of said tool. When the refuelling has been completed, the platform 238 is lifted to such an extent that it can be freely rotated to its original position, in which the reactor vessels are each positioned below a corresponding steam generator. Then each bellows 220 is released from its clamping device and the bellows are each connected to a corresponding steam generator as shown in Figure 19, whereafter the tool 242 is removed.

The rotatably arranged platform 238 supports, in addition to three reactor vessels 219, also three racks 243, 244, 245 arranged between the reactor vessels and designed for storing the spent fuel assemblies.

## Claims

1. Pressurized water reactor plant comprising a pressurized pool (2; 207) provided with a cover (61; 215) and filled with pool liquid in the form of water with a relatively high concentration of a neutron-absorbing agent, a cooling device (56; 216) for the pool liquid, a plurality of vertical fuel assemblies arranged to be traversed by a reactor coolant in the form of water with a relatively low concentration of a neutron-absorbing agent during normal reactor operation, said reactor coolant being pressurized in said pool with the same overpressure as said pool liquid, and a plurality of steam generators (22; 204) arranged to be traversed in the primary circuits by said reactor coolant and being each provided with an inlet conduit (28; 208) for feed water and an outlet conduit (27; 209) for genrated steam, said inlet conduits and said outlet conduits being passed through a wall (1; 243) defining said pool, characterized in that said fuel assemblies are arranged to form a plurality of reactor cores (7; 201) positioned adjacent each other and communicating with said pool liquid via a lower emergency shutdown opening (48; 205) and via an upper emergency shutdown opening (47), that each of said reactor cores (7; 201) is arranged in a reactor vessel (9; 219) traversed by said reactor coolant, that each of said reactor vessels is arranged vertically below and approximately coaxially with a corresponding steam generator, that each one reactor vessel is provided with channels for hydraulic connection of the reactor core to the primary circuit of the corresponding steam generator, that each one of said reactor vessels (9; 219) above the core is divided into a lower and an upper vessel portion, said portions being mechanically and hydraulically connected to each other by means of a detachable connection device (52; 223, 226, 227), operable from above, with the aid of which also associated lower and upper portions of said channels are detachably connected together, that said steam generator (22; 204) is fixed to a wall portion of said pool, and that said lower vessel portion rests on a foundation (101; 238) being arranged in the pool and permitting horizontal movement of said lower vessel portion such that said lower vessel portion — after said connection device has been detached — can be moved in lateral direction to a position in which its reactor core is accessible for refuelling.

2. Pressurized water reactor plant according to claim 1, characterized in that said foundation comprises a supporting body (238) for all the reactor vessels (219) and their contents, that said supporting body has a central portion and a circular edge portion, that said edge portion during normal reactor operation rests on a plurality of brackets (239) distributed along the inner periphery of the reactor vessel and that said central portion includes means for removal of lifting equipment (236) and means for receiving a central thrust bearing (235) in such a way that said thrust bearing (235), while being influenced by said lifting equipment and while maintaining its bearing function, is able to transmit a vertical force sufficient to lift said supporting body (238) and said reactor vessel.

## Patentansprüche

1. Druckwasserreaktoranlage mit einem unter Druck stehenden Becken (2; 207), welches mit einem Deckel (61; 215) versehen ist und mit einer Beckenflüssigkeit in Form von Wasser mit einer relativ hohen Konzentration eines neutronenabsorbierenden Mittels gefüllt ist, mit einer Kühleinrichtung (56; 216) für die Beckenflüssigkeit, mit einer Vielzahl von vertikalen Brennelementbündeln, die so angeordnet sind, daß sie während des normalen Reaktorbetriebes von einem Reaktorkühlmittel in Form von Wasser mit einer relativ geringen Konzentration eines neutronenabsorbierenden Mittels durchströmt werden, wobei dieses Reaktorkühlmittel in dem genannten Becken mit demselben Überdruck wie die Beckenflüssigkeit unter Druck gesetzt wird, und mit einer Anzahl von Dampferzeugern (22; 204), die derart im Primärkreislauf angeordnet sind, daß sie vom Reaktorkühlmittel durchströmt werden, und von denen jeder mit einer Zuführungsleitung (28; 208) für Speisewasser und mit einer Abführleitung (27; 209) für erzeugten Dampf versehen ist, wobei die Zuführungsleitungen und die Abführleitungen durch eine Wand (1; 243) hindurchführen, welche das Becken begrenzt, dadurch gekennzeichnet, daß die Brennelementbündel derart angeordnet sind, daß sie eine Anzahl von Reaktorkernen (7; 201) bilden, die nebeneinander angeordnet sind und mit der Beckenflüssigkeit über eine untere Notabschaltungsöffnung (48; 205) und eine obere Notabschaltungsöffnung (47) in Verbindung stehen, daß jeder Reaktorkern (7; 201) in einem Reaktorgefäß (9; 219) angeordnet ist, welches von dem Reaktorkühlmittel durchflossen wird, daß jedes Reaktorgefäß vertikal unterhalb eines entsprechenden Dampferzeugers und annähernd koachsial zu diesem angeordnet ist, daß jedes Reaktorgefäß mit känälen für eine hydraulische Verbindung des Reaktorkerns mit dem Primärkreis des zugehörigen Dampferzeugers versehen ist, daß jedes Reaktorgefäß (9; 219) oberhalb des Kerns in ein unteres und ein oberes Gefäßteil unterteilt ist, wobei die Gefäßteile mechanisch und hydraulisch miteinander verbunden sind mittels einer abnehmbaren Verbindungsvorrichtung (52; 223, 226, 227) welche von oben betätigbar ist und mit deren Hilfe auch zugehörige untere und obere Teile der genannten Kanäle lösbar miteinander verbunden sind, daß der Dampferzeuger (22; 204) an einem Wandteil des genannten Bekkens befestigt ist und daß das untere Gefäßteil auf einem Fundament (101; 238) ruht, welches im Becken angeordnet ist und eine solche horizontale Bewwegung des unteren Gefäßteils zuläßt, daß das untere Gefäßteil nach Entfernung der genannten Verbindungsvorrichtung in seitlicher Richtung in eine Stellung bewegt werden kann, in welcher sein Reaktorkern für eine Brennstofferneuerung zugänglich ist.

2. Druckwasserreaktoranlage nach Anspruch 1, dadurch gekennzeichnet, daß das genannte Fundament einen Tragkörper für alle Reaktorgefäße (219) und ihren Inhalt hat, daß dieser Tragkörper einen zentralen Bereich und einen kreisförmigen Randbereich hat, daß der Randbereich während des normalen Reaktorbetriebes auf eine Anzahl von Tragwinkeln (239) rhut, die längs des inneren Umfanges des Reaktorgefäßes verteilt angeordnet sind, und daß der zentrale Bereich Mittel zur Entfernung einer Hebeeinrichtung (236) und Mittel zur Aufnahme eines zentralen Druckkagers (235) derart hat, daß das Drucklager (235) während seiner Beeinflussung durch die Hebevorrichtung und während der Aufrechterhaltung seiner Tragfunktion im Stande ist, eine vertikale Kraft zu übertragen, die ausreicht, um den Tragkörper (238) und das Reaktorgefäß anzuheben.

## Revendications

1. Centrale nucléaire à réacteur à eau pressurisée comprenant une piscine pressurisée (2; 207) qui comporte un toit (61; 215) et qui est emplie d'un liquide de piscine consistant en eau avec une concentration relativement élevée d'un agent d'absorption de neutrons, un dispositif de refroidissement (56; 216) pour le liquide de la piscine, un ensemble d'assemblages combustibles verticaux disposés de façon à être traversés par un fluide de refroidissement du réacteur qui consiste en eau avec une concentration relativement faible d'un agent d'absorption de de neutrons pendant le fonctionnement normal du réacteur, ce fluide de refroidissement du réacteur étant pressurisé dans la piscine avec la même surpression que le liquide de la piscine, et un ensemble de générateurs de vapeur (22; 204) conçus de façon à être traversés dans les circuits primaires par le fluide de refroidissement du réacteur, et chacun d'eux comportant un conduit d'entré (28; 208) pour l'alimentation en eau et un conduit de sortie (27; 209) pour la vapeur produite, ces conduits d'entrée et de sortie traversant une paroi (1; 243) qui délimite la piscine, caractérisée en ce que les assemblages combustibles sont disposés de façon à former un ensemble de coeurs de réacteur (7; 201) placés de façon mutuellement adjacente et communiquant avec le liquide de la piscine par l'intermédiaire d'une ouverture d'arrêt d'urgence inférieure (48; 205) et par l'intermédiaire d'une ouverture d'arrêt d'urgence supérieure (47), en ce que chacun des coeurs de réacteur (7; 201) est disposé dans une cuve de réacteur (9; 219) qui est traversée par le fluide de refroidissement du réacteur, en ce que chacune des cuves de réacteur est disposée verticalement au-dessous d'un générateur de vapeur correspondant, et en position approximativement coaxiale avec ce dernier, en ce que chaque cuve de réacteur comporte des canaux pour établir une communication hydraulique entre le coeur du réacteur et le circuit primaire du générateur de vapeur correspondant, en ce que chacune des cuves de réacteur (9; 219) est divisée, au-dessus du coeur, en une partie du cuve inférieure et une partie de cuve supérieure, ces parties étant mutuellement accouplées mécaniquement et hydruliquement au moyen d'un dispositif d'accouplement séparable (52; 233, 226, 227) qu'on peut manóeuvrer à partir du haut, à l'aide duquel des pa'rties inférieures et supérieures associées des canaux précités sont également accouplées ensemble de manière séparable, en ce que le générateur de vapeur (22; 204) est fixé à une partie de paroi de la piscine, et en ce que la pa'rtie de cuve inférieure repose sur une structure de base (101; 238) qui est établie dans la piscine et qui permet un mouvement horizontal de la partie de cuve inférieure, de façon qu'après la séparation du dispositif d'accouplement, la partie de cuve inférieure puisse être déplacée en direction latérale vers une position dans laquelle son coeur de réacteur est accessible pour le remplacement du combustible.

2. Centrale nucléaire à réacteur à eau pressurisée selon la revendication 1, caractérisée en ce que la structure de base comprend un élément de support (238) pour toutes les cuves de réacteur (219) et leurs contenus, en ce que cet élément de support comporte une partie centrale et une partie périphérique circulaire, en ce que pendant le fonctionement normal du réacteur cette partie périphérique repose sur un ensemble de consoles (239) qui sont réparties à la périphérie intérieure de la cuve de réacteur et en ce que la partie centrale comprend des moyens destinés à l'enlèvement d'un équipement de levage (236) et des moyens destinés à recevoir une butée centrale (235), d'une manière telle qu'en étant soumise à l'action de l'équipement de levage et en maintenant sa fonction de palier, cette butée (235) soit capable de transmettre une force verticale suffisante pour soulever l'élément de support (238) et la cuve de réacteur.

0 157 321

FIG.1

## FIG. 2

## FIG. 3

## FIG. 4

# FIG. 5

3

FIG. 6

4

FIG.7

FIG. 8

0 157 321

## FIG.9

## FIG.10

FIG. 11

FIG. 12

FIG. 13

FIG. 14

## FIG. 15

## FIG. 16

FIG.17

**FIG. 18**

## FIG. 19

## FIG. 20 A

FIG. 20

FIG. 21